# EUROPÄISCHE PATENTSCHRIFT

(11) **EP 4 147 011 B1**
(45) Veröffentlichungstag und Bekanntmachung des Hinweises auf die Patenterteilung: **27.03.2024**
(21) Anmeldenummer: 21720708.3
(22) Anmeldetag: 19.04.2021
(51) Int. Cl.: G01F 1/58, G01F 23/26

(54) **MAGNETISCH-INDUKTIVE DURCHFLUSSMESSVORRICHTUNG UND VERFAHREN ZUM ERMITTELN EINES FÜLLSTANDES**
MAGNETIC-INDUCTIVE FLOW RATE MEASURING DEVICE AND PROCESS TO DETERMINE A FLUID LEVEL
DISPOSITIF DE MESURE DE DÉBIT MAGNÉTIQUE-INDUCTIF ET PROCÉDÉ POUR DÉTERMINER UN NIVEAU DE FLUIDE

(30) Priorität: 05.05.2020 DE 102020112129
(43) Veröffentlichungstag der Anmeldung: 15.03.2023
(73) Patentinhaber: Endress + Hauser Flowtec AG, 4153 Reinach (CH)
(72) Erfinder: TSCHUDIN, Beat, 4153 Reinach (CH); BIER, Thomas, 4125 Riehen (CH)
(74) Vertreter: Penner, Paul
(86) Internationale Anmeldenummer: PCT/EP2021/060039
(87) Internationale Veröffentlichungsnummer: WO 2021/223987

(56) Entgegenhaltungen:
- EP-A1- 0 892 251
- EP-B1- 0 892 251
- WO-A1-2019/192799
- WO-A1-2020/083583
- DE-A1-102006 014 677
- DE-A1-102011 079 351
- DE-A1-102015 120 730
- DE-A1-102017 131 202
- DE-A1-102018 126 679

## Beschreibung

Die Erfindung betrifft eine magnetisch-induktive Durchflussmessvorrichtung zum Ermitteln einer strömungsgeschwindigkeitsabhängigen Messgröße eines fließfähigen Mediums in einem Messrohr oder in einer Rohrleitung und ein Verfahren zum Ermitteln eines Füllstandes eines Mediums in einem Messrohr oder in einer Rohrleitung.

Eine magnetisch-induktive Durchflussmessvorrichtung umfasst Messgeräte, die basierend auf dem Faraday'schen Gesetz der elektromagnetischen Induktion eine strömungsgeschwindigkeitsabhängige Messgröße eines fließfähigen Mediums relativ zum Messgerät erfassen. Beispiele für magnetisch-induktive Durchflussmessvorrichtung sind magnetisch-induktive Durchflussmessgeräte und magnetisch-induktive Durchflussmesssonden.

Magnetisch-induktive Durchflussmessgeräte umfassen ein Messrohr zum Führen eines fließfähigen Mediums und werden zur Bestimmung der Durchflussgeschwindigkeit und des Volumendurchflusses des Mediums in eine Prozessleitung eingesetzt. Ein magnetisch-induktives Durchflussmessgerät weist eine Vorrichtung zum Erzeugen eines Magnetfeldes auf, das ein das Messrohr durchsetzendes Magnetfeld senkrecht zur Flussrichtung des fließenden Mediums erzeugt. Dafür werden üblicherweise einzelne Spulen verwendet, die zusammen eine Spulenanordnung bilden. Um ein überwiegend homogenes Magnetfeld zu realisieren, werden zusätzlich zu den Spulenkerne Polschuhe so geformt und angebracht, dass die Magnetfeldlinien über den gesamten Rohrquerschnitt im Wesentlichen senkrecht zur Querachse bzw. parallel zur Vertikalachse des Messrohres verlaufen. Eine an die Mantelfläche des Messrohres angebrachtes Messelektrodenpaar greift eine senkrecht zur Flussrichtung und zum Magnetfeld induzierte elektrische Messspannung bzw. Potentialdifferenz ab, die entsteht, wenn ein leitfähiges Medium bei angelegtem Magnetfeld in Flussrichtung fließt. Da die abgegriffene Messspannung laut Faraday'schem Induktionsgesetz von der Geschwindigkeit des fließenden Mediums abhängt, kann aus der induzierten Messspannung die Durchflussgeschwindigkeit und, mit Hinzunahme eines bekannten Rohrquerschnitts, der Volumendurchfluss ermittelt werden.

Die WO 2014/053324 A2 lehrt ein magnetisch-induktives Durchflussmessgerät mit einem Füllstandsüberwachungssystem, welches neben der Unterscheidung zwischen einer Teil- und Vollbefüllung die Ermittlung der Mediumstemperatur mit einer Füllstandselektrode integrierten Temperatursensor erlaubt und sich zugleich durch einen kompakten Aufbau auszeichnet. Für die Überwachung des Füllstandes wird eine Leitfähigkeit des Mediums zwischen der Füllstandsüberwachungselektrode und einer Referenzelektrode oder einer Messelektrode bestimmt. Dafür ist es erforderlich, dass die Füllstandsüberwachungselektrode einen galvanischen Kontakt mit dem zu führenden Medium bildet. Ein ähnliches Konzept lehrt die WO 2020/083583 A1. Nachteilig daran ist, dass dadurch eine zusätzliche Öffnung für die Füllstandsüberwachungselektrode im Messrohr vorzusehen ist und die Füllstandsüberwachungselektrode somit einem eventuell abrasiven und korrosiven Medium schutzlos ausgesetzt ist.

Aus der DE 196 15 140 A1 ist eine Vorrichtung zum Bestimmen eines Füllstandes in einem Messrohr bekannt, welche dazu eingerichtet ist mit zwei an den Außenflächen des Messrohres angebrachten Kondensatorenplatten eine von der Dielektrizitätskonstante des Mediums und der Füllhöhe abhängige Kapazität zu bestimmen und aus der ermittelten Kapazität eine Füllhöhe zu ermittelt.

Die DE 10 2012 006 891 A1 lehrt ein magnetisch-induktives Durchflussmessgerät, welches zusätzlich zur strömungsgeschwindigkeitsabhängigen Messgröße einen Grad der Befüllung ermittelt. Dafür weist es eine zusätzliche Magnetfelderzeugungseinrichtung auf, die ein Magnetfeld erzeugt, dessen Magnetfeldlinien parallel zur Längsachse des Messrohres verlaufen. Die durch das zusätzliche Magnetfeld bedingte Messspannung an den streifenförmigen Messelektroden ist ein Maß für den Füllstand des Mediums.

Der Erfindung liegt die Aufgabe zugrunde, eine alternative magnetisch-induktive Durchflussmessvorrichtung bereitzustellen, die dazu geeignet ist Auskunft über einen Füllstand des Mediums zu geben.

Zudem liegt der Erfindung die Aufgabe zugrunde, ein alternatives Verfahren für eine magnetisch-induktive Durchflussmessvorrichtung bereitzustellen, mit dem ein Füllstand des Mediums ermittelt werden kann.

Die Aufgabe wird gelöst durch die magnetisch-induktive Durchflussmessvorrichtung nach Anspruch 1 und das Verfahren zum Ermitteln eines Füllstandes nach Anspruch 11.

Die erfindungsgemäße magnetisch-induktive Durchflussmessvorrichtung zum Ermitteln einer strömungsgeschwindigkeitsabhängigen Messgröße eines fließfähigen Mediums in einem Messrohr oder in einer Rohrleitung umfasst:
- ein Gehäuse;
- mindestens zwei Messelektroden zum Bilden eines galvanischen Kontaktes mit dem Medium und zum Abgreifen einer induzierten Spannung im Medium;
- eine Vorrichtung zum Erzeugen eines Magnetfeldes,

wobei die Vorrichtung zum Erzeugen des Magnetfeldes im Gehäuse angeordnet ist,
wobei die Vorrichtung zum Erzeugen des Magnetfeldes eine Feldführungsanordnung und eine Spulenanordnung umfasst,
wobei die Feldführungsanordnung als eine Sensorelektrode zur kapazitiven Bestimmung und/oder Überwachung zumindest einer Prozessgröße, insbesondere eines Füllstandes des Mediums in der Rohrleitung oder dem Messrohr dient.

Die Feldführungsanordnung dient dazu, das durch die Spulenanordnung erzeugte Magnetfeld zu verstärken und zu führen. Sie umfasst mindestens einen Feldführungskörper, wie zum Beispiel einen Spulenkern, welcher in einer Spule der Spulenanordnung angeordnet ist. Zudem werden häufig Polschuhe verwendet, die dazu dienen, dass die Magnetfeldlinien des Magnetfeldes beim Austreten aus dem Spulenkern über eine möglichst große Querschnittsfläche des Messrohres oder der Rohrleitung parallel verlaufen. Zudem sind magnetisch-induktive Durchflussmessvorrichtungen bekannt, in denen Feldrückführungskörper eingesetzt werden, um das erzeugte Magnetfeld wieder kontrolliert zurück zum Spulenkern zu führen. Der Feldführungskörper kann monolithisch oder teilweise monolithisch ausgebildet sein. So ist beispielsweise bekannt, den Spulenkern und den Polschuh einteilig auszubilden, wobei der Teil, welcher sich durch eine Öffnung der Spule erstreckt als Spulenkern bezeichnet wird und der Teil, welcher sich zwischen Spule und Gehäusewandung bzw. Messrohrwandung in Richtung des Mediums erstreckt als Polschuh. Die einzelnen Komponenten des Feldführungskörper umfassen in der Regel weichmagnetische Werkstoffe. Erfindungsgemäß ist ein elektrisch leitfähiges Material für den Feldführungskörper zu verwenden.

Es sind kapazitive Füllstandsmessgeräte bekannt, die ausgehend von einer ermittelten Kapazität oder Kapazitätsänderung den Füllstand eines Mediums in einem Behälter ermitteln. Dafür weist ein kapazitives Füllstandmessgerät eine Sensorelektrode auf, die in einem Gehäuse mit einer elektrische isolierenden Wandung angeordnet ist und zusammen mit einer leitenden Gegenelektrode - in der Regel die metallischen Wandung des Behälters - einen elektrischen Kondensator bildet. Es ist zwischen Anwendungen in denen ein elektrisch leitfähiges Medium und Anwendungen in denen ein elektrisch nichtleitfähiges Medium eingesetzt wird zu unterscheiden. Leitfähige Medien, welche im elektrischen Kontakt zur Gegenelektrode stehen nehmen das elektrische Potentials der Gegenelektrode an, so dass sich das elektrische Feld im Wesentlichen in der elektrisch isolierenden Wandung des Gehäuses ausbildet. Befindet sich zwischen der Sensorelektrode und der Gegenelektrode ein nicht-leitendes Medium, so bildet sich das elektrische Feld im Medium aus, wodurch die Dielektrizitätskonstante des Mediums einen wesentlichen Einfluss auf die ermittelte Kapazität nimmt.

Auf dem kapazitiven Messprinzip beruhende Messgeräte sind an sich aus dem Stand der Technik bekannt und werden von der Anmelderin in vielen unterschiedlichen Ausgestaltungen hergestellt und beispielsweise unter den Bezeichnungen Liquicap, Solicap oder Liquipoint vertrieben. Kapazitive Messgeräte weisen in der Regel ein im Wesentlichen zylindrisches Gehäuse mit zumindest einer Sensorelektrode auf, welche zumindest teilweise in einen Behälter oder eine Rohrleitung einbringbar ist. Einerseits sind, insbesondere zur kontinuierlichen Füllstandsmessung, vertikal in den Behälter hineinreichende stabförmige Messgeräte weitverbreitet. Zur Erkennung eines Grenzstandes sind jedoch auch in die Seitenwandung eines jeweiligen Behälters einbringbare Messgeräte bekannt geworden.

Die vorliegende Feldführungsanordnung weist einen Feldführungskörper auf, der elektrisch leitfähig ist. Dies erlaubt es die Feldführungsanordnung zu zweckentfremden und als eine Sensorelektrode einzurichten, die eine Messkapazität ermittelt, anhand der Aussagen über den Füllstand des Mediums in der Rohrleitung oder im Messrohr gemacht werden können. Dabei übernimmt das Medium entweder die Rolle der Gegenelektrode oder des Dielektrikums.

Die vorliegende Erfindung eignet sich zur kontinuierlichen Überwachung und/oder Bestimmung des Füllstandes, welche eine Ermittlung der vorliegenden Füllhöhe umfasst, oder zur Bestimmung ob ein bzw. welcher binärer Zustand - Vollbefüllung oder Teilbefüllung - vorliegt.

Für die Bestimmung eines Volumendurchflusses wird die ermittelte Strömungsgeschwindigkeit mit der Querschnittsfläche des Messrohres oder der Rohrleitung multipliziert. Dies gilt jedoch nur, wenn das Messrohr vollgefüllt ist. Es ist daher vorteilhaft, wenn die magnetisch-induktive Durchflussmessvorrichtung zusätzlich dazu ausgebildet ist, eine Aussage zu treffen, ob eine Teilbefüllung bzw. Vollbefüllung vorliegt oder nicht.

Feldgeräte in Form von Multisensoren sind bereits bekannt. So gibt es Messgeräte, welche sowohl in einem kapazitiven als auch einem konduktiven Betriebsmodus arbeiten können. Beispiele dafür werden in den Dokumenten DE 10 2011 004 807 A1, DE 10 2013 102 055 A1 oder DE 10 2014 107 927 A1 offenbart. Neben der Prozessgröße Füllstand lassen sich mittels eines derartigen Multisensors verschiedene medienspezifische Eigenschaften, wie die elektrische Leitfähigkeit des Mediums, oder auch dielektrische Eigenschaften des Mediums, wie beispielsweise dessen Dielektrizitätskonstante, bestimmen, wie in der DE 10 2013 104 781 A1 beschrieben. Derartige Messgeräte unterscheiden sich vom Gegenstand der vorliegenden Erfindung insbesondere darin, dass die Messelektroden zur Bestimmung einer Leitfähigkeit des Mediums eingesetzt werden und nicht wie erfindungsgemäß zum Ermitteln einer induzierten Messspannung. Zudem weisen derartige Messgeräte keine Vorrichtung zum Erzeugen eines Magnetfeldes auf, was für die Bestimmung einer strömungsgeschwindigkeitsabhängigen Messgröße basierend auf dem Faraday'schen Gesetz der elektromagnetischen Induktion unabdingbar ist.

Die strömungsgeschwindigkeitsabhängige Messgröße umfasst eine Durchflussgeschwindigkeit, einen Volumendurchfluss und/oder einen Massedurchfluss.

Vorteilhafte Ausgestaltung der Erfindung sind Gegenstand der Unteransprüche.

Eine Ausgestaltung sieht vor, dass eine insbesondere im Gehäuse angeordnete Betriebsschaltung mit der Feldführungsanordnung insbesondere elektrisch verbunden ist,
wobei die Betriebsschaltung dazu eingerichtet ist, die Feldführungsanordnung mit einem insbesondere zeitlich alternierenden Erregersignal zu beaufschlagen, von der Feldführungsanordnung ein Antwortsignal zu empfangen und zumindest aus dem Antwortsignal eine Aussage über den Füllstand des Mediums in der Rohrleitung oder dem Messrohr zu treffen.

Während des Messbetriebs wird die Sensorelektrode mit einem Erregersignal, in der Regel in Form eines Wechselstromsignals oder eines Wechselspannungssignals, beaufschlagt. Dieses wird durch die Betriebsschaltung bereitgestellt. Aus dem von der Sensorelektrode oder einer weiteren dazu ausgebildeten und eingerichteten Sensorelektrode empfangenen Antwortsignal kann anschließend die jeweilige Prozessgröße - d.h. der vorliegende Füllstand oder ob eine Vollbefüllung vorliegt - bestimmt werden. Gemäß dem kapazitiven Messprinzip wird die Abhängigkeit des Antwortsignals von der Kapazität des von der Sensorelektrode und der Wandung des Behälters, oder des von der Sensorelektrode und einer zweiten Elektrode gebildeten Kondensators ausgenutzt. Je nach Leitfähigkeit des Mediums bildet entweder das Medium selbst oder eine Isolierung der Sensorelektrode das Dielektrikum dieses Kondensators.

Zur Auswertung des von der Sensorelektrode empfangenen Antwortsignals in Bezug auf den Füllstand kann dann beispielsweise entweder eine Scheinstrommessung oder auch eine Admittanzmessung durchgeführt werden. Bei einer Scheinstrommessung wird der Betrag des an der Sensorelektrode ermittelten Scheinstroms gemessen. Da der Scheinstrom jedoch an sich einen Wirk- und einem Blindanteil aufweist, wird im Falle einer Admittanzmessung neben dem Scheinstrom der Phasenwinkel zwischen dem Scheinstrom und der an der Sensoreinheit anliegenden Spannung gemessen. Eine weitere Möglichkeit für die Ermittlung eines Füllstandes besteht darin eine Frequenzverschiebung zwischen einem Referenzsignal und Antwortsignal zu ermitteln, wobei das Referenzsignal beispielsweise in einem - bspw. werkseitigen - Justierverfahren ermittelt wird.

Die zusätzliche Bestimmung des Phasenwinkels erlaubt es darüber hinaus Aussagen über eine mögliche Ansatzbildung zu treffen, wie beispielsweise aus der DE 10 2004 008 125 A1 bekannt geworden ist.

Die Betriebsschaltung ist für die Signaleinspeisung, -erfassung und -auswertung verantwortlich und dementsprechend ausgebildet. Sie kann so konfiguriert werden, dass sie bestimmte Operationen ausführt, die eine Kontrollstruktur umfassen, um ein Erregersignal bereitzustellen und ein Antwortsignal zu ermitteln. In bestimmten Ausführungsformen bildet die Betriebsschaltung einen Teil eines Verarbeitungs-Subsystems, das eine oder mehrere Rechenvorrichtungen mit Speicher-, Verarbeitungs- und/oder Kommunikationshardware umfasst. Die Betriebsschaltung kann eine einzelne Einheit oder ein mehrteilige Einheit sein, welche Teile miteinander kommunizieren. Die Funktionen der Betriebsschaltung können durch Hardware und/oder Software ausgeführt werden. Die Betriebsschaltung kann eine oder mehrere arithmetisch-logische Einheiten (ALUs), zentrale Verarbeitungseinheiten (CPUs), Speicher, Begrenzer, Konditionierer, Filter, Oszillatoren, Formatkonverter oder ähnliches enthalten, die aus Gründen der Übersichtlichkeit nicht dargestellt werden. In einer Form ist die Betriebsschaltung so programmierbar, dass er Algorithmen ausführt und Daten gemäß der Betriebslogik verarbeitet, die durch Programmieranweisungen, wie Software oder Firmware, definiert ist. Alternativ oder zusätzlich kann die Betriebslogik für die Betriebsschaltung zumindest teilweise durch festverdrahtete Logik oder andere Hardware definiert werden, z.B. durch eine anwendungsspezifische integrierte Schaltung (ASIC) eines beliebigen geeigneten Typs. Es ist zu berücksichtigen, dass die Betriebsschaltung ausschließlich für das Erzeugen des Erregersignales und das Bestimmen des Antwortsignales bestimmt sein kann oder weiter bei der Regelung, Steuerung und Aktivierung eines oder mehrerer anderer Subsysteme oder Aspekte der magnetisch-induktiven Durchflussmessvorrichtung verwendet werden kann.

Eine Ausgestaltung sieht vor, dass die magnetisch-induktive Durchflussmessvorrichtung ein magnetisch-induktives Durchflussmessgerät umfasst,
wobei das magnetisch-induktive Durchflussmessgerät ein Messrohr umfasst,
wobei das Messrohr einen elektrisch isolierenden Messrohrkörper umfasst,
wobei die mindestens zwei Messelektroden insbesondere diametral am Messrohrkörper angeordnet sind,
wobei der Messrohrkörper eine Außenfläche umfasst,
wobei die Feldführungsanordnung an der Außenfläche angeordnet ist.

Gemäß der Ausgestaltung wird ein magnetisch-induktives Durchflussmessgerät eingesetzt zum Ermitteln der strömungsgeschwindigkeitsabhängigen Messgröße. Im Einsatz wird das magnetisch-induktive Durchflussmessgerät in eine Rohrleitung integriert. Anders als bei einer magnetisch-induktiven Durchflussmesssonde ist das Gehäuse des magnetisch-induktiven Durchflussmessgerätes nicht dazu eingerichtet, um mit dem zu führenden Medium beaufschlagt zu werden und dient zudem nicht als Trennung zwischen dem Medium und der Vorrichtung zum Erzeugen des Magnetfeldes.

Herkömmliche Messrohre weisen Messrohrkörper auf, welche aus einem leitfähigen Material gebildet sind, und eignen sich somit nicht für die vorliegende Erfindung. Es ist unabdingbar, dass der Messrohrkörper aus einem elektrisch isolierenden Material gefertigt ist. Das elektrisch isolierende Material umfasst Kunststoff, Keramik und/oder Glas.

Eine Ausgestaltung sieht vor, dass die Feldführungsanordnung einen, insbesondere genau einen Feldführungskörper umfasst,
wobei der Feldführungskörper einen Spulenkern und/oder einen Polschuh umfasst.

Gemäß der Ausgestaltung dient der Spulenkern und/oder der Polschuh als Sensorelektrode und entspricht in der Funktionsweise einem kapazitiven Näherungsschalter, der berührungsfrei auf Annäherung eines leitenden oder nicht leitenden Gegenstandes, aber auch von Flüssigkeiten, mit einem elektrischen Schaltsignal reagiert. Dem Schaltsignal kann man eine Vollbefüllung bzw. eine Teilbefüllung des Messrohres oder der Rohrleitung zuordnen.

Eine Ausgestaltung sieht vor, dass die Feldführungsanordnung zwei, insbesondere diametral an der Außenfläche angeordnete Feldführungskörper umfasst,
wobei die Feldführungskörper jeweils einen Spulenkern und/oder einen Polschuh umfassen,
wobei die Spulenanordnung zwei Spulen umfasst,
wobei die zwei Feldführungskörper jeweils mit einer der zwei Spulen in Wirkung stehen.

Gemäß der Ausgestaltung dient einer der zwei Feldführungskörper als Sensorelektrode oder dienen beide Feldführungskörper jeweils als Sensorelektrode.

Dient ausschließlich einer der zwei Feldführungskörper als Sensorelektrode, so ist die Betriebsschaltung auch ausschließlich mit dem einen Feldführungskörper verbunden und dazu eingerichtet das Erregersignal an ebendiesen Feldführungskörper aufzuprägen und das Antwortsignal ebenfalls an dem genannten Feldführungskörper zu ermitteln.

Dienen beide Feldführungskörper jeweils als Sensorelektrode, so sind beide mit der Betriebsschaltung elektrisch verbunden. In dem Fall treten zwei mögliche Szenarien ein. Zum einen kann die Betriebsschaltung dazu eingerichtet sein, an einem der zwei Feldführungskörper ein Erregersignal einzuspeisen und das Antwortsignal an dem anderen Feldführungskörper zu ermitteln und zum anderen kann die Betriebsschaltung dazu eingerichtet sein, an den beiden Feldführungskörpern jeweils ein Erregersignal aufzuprägen und an den beiden Feldführungskörpern jeweils ein Antwortsignal zu ermitteln. Im ersten Fall kann durch Änderungen der dielektrischen Eigenschaften des Mediums die Messkapazität nicht eindeutig auf eine Abnahme des Füllstandes geschlossen werden. Insbesondere bei Ablagerungen oder Sedimentation kann es zu einer Abnahme der ermittelten Messkapazität kommen. Im zweiten Fall kann vorteilhafterweise zwischen einer Teilbefüllung und einer Sedimentation oder einer Ablagerung unterschieden werden. Dies erfolgt durch Vergleichen der zwei ermittelten Messkapazitäten. Ist ein ermittelter Messwert der Messkapazität niedriger als der Referenzwert, so befindet sich entweder ein nicht-leitendes Medium in unmittelbarer Nähe der Sensorelektrode oder ein Medium mit geringerer Dielektrizitätskonstante - z.B. Luft oder Sand - als das zu führende Medium.

In Wirkung stehen bedeutet in dem Kontext der Patentanmeldung, dass die Feldführungskörper derart angeordnet sind, dass das durch die Spulenanordnung erzeugte Magnetfeld verstärkt wird. Dies kann beispielsweise dadurch realisiert werden, dass der Feldführungskörper, insbesondere der Spulenkern des Feldführungskörpers in eine Öffnung einer Spule der Spulenanordnung angeordnet wird.

Es sind Feldführungsanordnungen bekannt, bei denen zwei diametral angeordnete Spulenkerne über Feldrückführungskörper miteinander verbunden sind. Die Feldrückführungskörper dienen dazu, das an der dem Medium abgewandten Seite des einen Spulenkerns erzeugte Magnetfeld zum jeweils anderen Spulenkern zu führen. Ist einer der beiden Feldführungskörper oder sind beide Feldführungskörper mit der Betriebsschaltung elektrisch verbunden so ist es wesentlich, dass die beiden Spulenkerne nicht über die Feldrückführungskörper elektrisch miteinander verbunden sind. Eine elektrische Entkopplung wird durch die Anordnung eines elektrischen Isolators zwischen der Spulenkerne und dem Feldrückführungskörper realisiert. Somit wird ein Kurzschluss zwischen den beiden Spulenkernen verhindert und gleichzeitig die Funktion des Feldrückführungskörpers aufrechterhalten.

Eine Ausgestaltung sieht vor, dass genau einer der zwei Feldführungskörper mit der Betriebsschaltung verbunden ist.

Gemäß der Ausgestaltung ist die Betriebsschaltung dazu eingerichtet, das Erregersignal ausschließlich an dem einen Feldführungskörper aufzuprägen und das Antwortsignal an ebendiesen zu ermitteln. Eine derartige Ausgestaltung lässt sich einfach in herkömmliche magnetisch-induktive Durchflussmessgeräte implementieren.

Eine Ausgestaltung sieht vor, dass die zwei Feldführungskörper jeweils mit der Betriebsschaltung verbunden sind, und
wobei die Betriebsschaltung dazu eingerichtet ist einen ersten Feldführungskörper der zwei Feldführungskörper mit einem insbesondere zeitlich alternierenden Erregersignal zu beaufschlagen, von einem zweiten Feldführungskörper der zwei Feldführungskörper ein Antwortsignal zu empfangen und zumindest aus dem Antwortsignal eine Aussage über den Füllstand des Mediums in dem Messrohr, eine Ablagerung und/oder eine Sedimentation in dem Messrohr zu treffen, oder
wobei die Betriebsschaltung dazu eingerichtet ist einen ersten Feldführungskörper der zwei Feldführungskörper und einen zweiten der zwei Feldführungskörpern jeweils mit einem insbesondere zeitlich alternierenden Erregersignal zu beaufschlagen, von dem ersten Feldführungskörper und dem zweiten Feldführungskörper jeweils ein Antwortsignal zu empfangen und zumindest aus den zwei Antwortsignalen eine Aussage über den Füllstand des Mediums in dem Messrohr, eine Ablagerung und/oder eine Sedimentation in dem Messrohr zu treffen.

Vorteilhaft an der Ausgestaltung ist, wie oben ausgeführt die Möglichkeit zwischen einer Teilbefüllung und einer Sedimentierung oder Ablagerung zu unterscheiden.

Vorteilhaft an der ersten genannten Ausgestaltung ist die Anwendung bei Medien mit geringer Leitfähigkeit.

Die zwei Sensorelektroden dienen gemäß der zweiten Form der Ausgestaltung jeweils als kapazitiver Näherungsschalter. Ändert sich die ermittelte Messkapazität so kann unter Berücksichtigung der Positionierung der Feldführungskörper auf eine Teilbefüllung oder eine Ablagerung/ Sedimentation zurückgeschlossen werden.

Eine Ausgestaltung sieht vor, dass eine Bezugselektrode, welche mit einem Bezugspotential verbunden ist, derart am Messrohrkörper angeordnet ist, um mit dem fließfähigen Medium einen galvanischen Kontakt zu bilden,
wobei die Betriebsschaltung dazu eingerichtet ist, das Erregersignal in Bezug auf die Bezugselektrode an dem Feldführungskörper aufzuprägen.

Die Bezugselektrode kann beispielsweise als eine Stiftelektrode, Pilzelektrode oder als Erdungsring, welcher zwischen dem Messrohr und der Rohrleitung angeordnet ist, ausgebildet sein.

Zudem ist die Betriebsschaltung vorteilhafterweise dazu eingerichtet das Antwortsignal in Bezug auf die Bezugselektrode an dem Feldführungskörper zu ermitteln.

Eine Ausgestaltung sieht vor, dass die Betriebsschaltung mit der Spulenanordnung insbesondere elektrisch verbunden ist und dazu eingerichtet ist ein getaktetes Magnetfeld zu erzeugen bei dem sich zwischen zwei Anregungsphasen eine Ruhephase befindet, in der im Wesentlichen kein Spulenstrom fließt,
wobei in der Ruhephase das Erregersignal erzeugt und das Antwortsignal empfangen wird.

Um ein Verschieben des Nullpunktes zu vermeiden wird in den meisten Fällen ein getaktetes Magnetfeld mit alternierender Magnetfeldrichtung über die Spulenanordnung erzeugt. In den Phasen der Anregungsphase, in denen der Spulenstrom an der Spulenanordnung im Wesentlichen konstant ist wird die induzierte Messspannung ermittelt und für die Ermittlung der strömungsgeschwindigkeitsabhängigen, induzierten Messspannung verwendet. Gemäß der vorteilhaften Ausgestaltung sind zwischen einzelnen Anregungsphasen Ruhephasen vorgesehen, in denen der Spulenstrom und somit auch das erzeugte Magnetfeld Null sind. In diesen Ruhephasen wird das Erregersignal an die Sensorelektrode aufgeprägt und ein Antwortsignal ermittelt. Somit wird sichergestellt, dass weder die induzierte Messspannung Einfluss auf das Antwortsignal nimmt noch, dass das erzeugte Erregersignal Einfluss auf die gemessene induzierte Spannung nimmt.

Eine Ausgestaltung sieht vor, dass die Betriebsschaltung dazu eingerichtet ist, einen Messwert einer elektrischen Kapazität der Feldführungsanordnung zum Medium zumindest anhand des Antwortsignales zu bestimmen und anhand einer Abweichung der ermittelten Messwerte von einem Referenzwert, insbesondere einer Referenzkapazität eine Information bezüglich des Füllstandes zu ermitteln.

Die Ermittlung der Information bezüglich des Füllstandes umfasst im einfachsten Fall, das Vorliegen einer Vollbefüllung oder einer Teilbefüllung.

Das erfindungsgemäße Verfahren zum Ermitteln eines Füllstandes eines Mediums in einem Messrohr oder in einer Rohrleitung mit der erfindungsgemäßen magnetisch-induktiven Durchflussmessvorrichtung und bevorzugt mit einem magnetisch-induktiven Durchflussmessgerät, umfassend die Verfahrensschritte:
- Beaufschlagen eines Feldführungskörpers mit einem elektrischen, insbesondere zeitlich alternierenden Erregersignal,
- Empfangen eines elektrischen Antwortsignals von dem Feldführungskörper,
- Ermitteln einer Messkapazität oder eine von der Messkapazität abhängige Größe zumindest anhand des Antwortsignals, und
- Bestimmen eines Füllstandes des Mediums in einer Rohrleitung oder in einem Messrohr anhand der Messkapazität oder anhand der von der Messkapazität abhängigen Größe.

Vorteilhafte Ausgestaltung der Erfindung sind Gegenstand der Unteransprüche.

Eine Ausgestaltung sieht vor, dass die Feldführungsanordnung insbesondere genau einen Feldführungskörper umfasst,
wobei das Beaufschlagen des Erregersignals insbesondere ausschließlich an dem Feldführungskörper erfolgt,
wobei das Empfangen des Antwortsignals insbesondere ausschließlich an dem Feldführungskörper erfolgt.

Eine Ausgestaltung sieht vor, dass die Feldführungsanordnung zwei insbesondere diametral angeordnete Feldführungskörper umfasst,
wobei das Beaufschlagen des Erregersignals insbesondere ausschließlich an einem ersten Feldführungskörper der zwei Feldführungskörper erfolgt,
wobei das Empfangen des Antwortsignals insbesondere ausschließlich an einem zweiten Feldführungskörper der zwei Feldführungskörper erfolgt.

Die Erfindung wird anhand der nachfolgenden Figuren näher erläutert. Es zeigt:
Fig. 1: einen Querschnitt durch ein magnetisch-induktives Durchflussmessgerät nach dem Stand der Technik;
Fig. 2: einen Querschnitt durch eine erste Ausgestaltung des erfindungsgemäßen magnetisch-induktiven Durchflussmessgerätes;
Fig. 3: einen Querschnitt durch eine zweite Ausgestaltung des erfindungsgemäßen magnetisch-induktiven Durchflussmessgerätes; und
Fig. 4: einen erfindungsgemäßen Verfahrensablauf zum Ermitteln eines Füllstandes eines Mediums in einem Messrohr oder in einer Rohrleitung mit einer magnetisch-induktiven Durchflussmessvorrichtung.

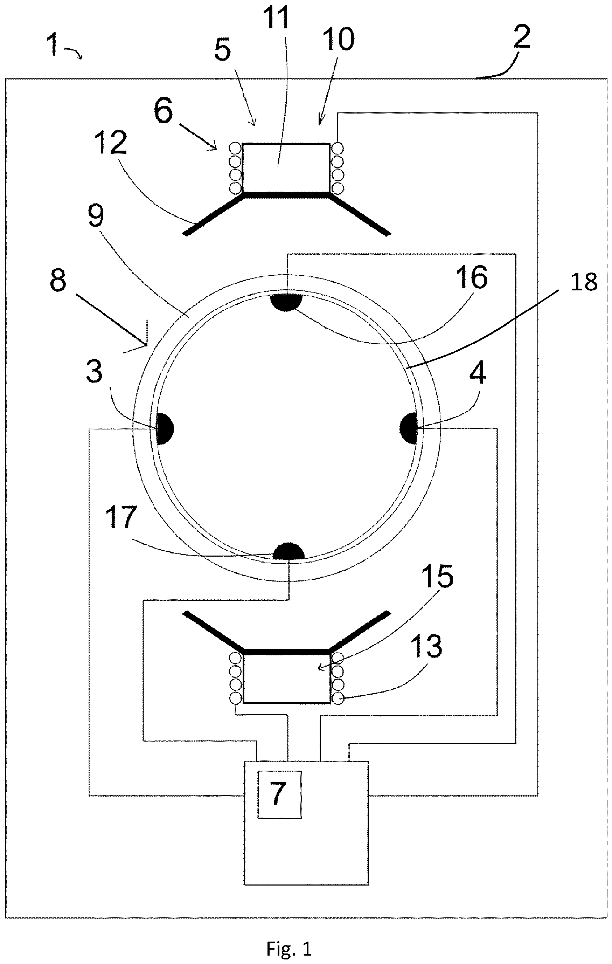

Die Fig. 1 zeigt einen Querschnitt einer aus dem Stand der Technik bekannten magnetisch-induktiven Durchflussmessvorrichtung, nämlich einem magnetisch-induktiven Durchflussmessgerät. Der Aufbau und das Messprinzip eines magnetisch-induktiven Durchflussmessgerätes sind grundsätzlich bekannt. Durch ein Messrohr 8 wird ein fließfähiges Medium geleitet, welches eine elektrische Leitfähigkeit aufweist. Eine Vorrichtung zum Erzeugen eines Magnetfeldes 10 ist so am Messrohr 8 angeordnet, dass sich die Magnetfeldlinien im Wesentlichen senkrecht zu einer durch die Messrohrachse definierten Längsrichtung orientieren. Die Vorrichtung zum Erzeugen des Magnetfeldes 10 umfasst eine Feldführungsanordnung 5 und eine Spulenanordnung 6. Die abgebildete Feldführungsanordnung 5 umfasst zwei Feldführungskörper 10, welche jeweils einen Spulenkern 11, der sich durch eine Öffnung in einer Spule erstreckt, und einen Polschuh 12 umfassen. Gemäß der Fig. 1 ist die Vorrichtung zum Erzeugen des Magnetfeldes 5 vom Messrohr 8 beabstandet angeordnet. Üblicherweise liegt die Vorrichtung 5 jedoch auf der äußeren Mantelfläche des Messrohres 8 auf. Aus Übersichtsgründen wurde auf die Darstellung der Feldrückführungskörper verzichtet. Die Feldrückführungskörper verbinden üblicherweise die dem Medium bzw. dem Polschuh abgewandten Seiten der beiden Spulenkerne. Die Feldführungskörper weisen einen magnetisch und elektrisch leitenden, insbesondere weichmagnetischen Werkstoff auf. Die Spulenanordnung 6 umfasst zwei diametral angeordnete Spulen 13, die jeweils durch einen Spulenhalter und einen auf den Spulenhalter aufgewickelten Spulendraht gebildet sind. Ein Gehäuse 2 schützt die Vorrichtung zum Erzeugen des Magnetfeldes 5 gegen äußere Einflüsse.

Bei einem angelegtem Magnetfeld bildet sich im Messrohr 8 eine durchflussabhängige Potentialverteilung aus, die mit zwei an der Innenwand des Messrohrkörpers 9 gegenüberliegend, angebrachten Messelektroden 3, 4 abgreifbar ist. In der Regel sind diese diametral angeordnet und bilden eine Elektrodenachse bzw. werden durch eine Querachse geschnitten, die senkrecht zu den Magnetfeldlinien und der Längsachse des Messrohres 8 verläuft. Anhand der gemessenen induzierten Messspannung ist die Durchflussgeschwindigkeit und, unter zusätzliche Berücksichtigung der Rohrquerschnittsfläche, der Volumendurchfluss des Mediums bestimmbar. Um das Ableiten der an der ersten und zweiten Messelektrode 3, 4 anliegenden Messspannung über das Messrohr 8 zu verhindern, wird die Innenwand mit einem isolierenden Material, beispielsweise einem Kunststoff- oder Keramik-Liner 18 ausgekleidet. Alternativ ist der Messrohrkörper aus einem elektrisch isolierenden Material, wie z.B. Kunststoff oder Keramik, gefertigt.

Das durch die Vorrichtung zum Erzeugen des Magnetfeldes 4 aufgebaute Magnetfeld wird beispielsweise durch einen mittels einer Betriebsschaltung 7 getakteten Gleichstrom wechselnder Polarität erzeugt. Dies gewährleistet einen stabilen Nullpunkt und macht die Messung unempfindlich gegenüber Einflüssen durch elektrochemische Störungen. Eine Messschaltung ist dazu eingerichtet die an den zwei Messelektroden 3, 4 anliegende, induzierte Messspannung zu ermitteln und eine Auswerteschaltung ist dazu ausgebildet die Durchflussgeschwindigkeit und/oder den Volumendurchfluss des Mediums in Abhängigkeit von der gemessenen Messspannung zu ermitteln.

Handelsübliche magnetisch-induktive Durchflussmessgeräte weisen zusätzlich zu den Messelektroden 3, 4 zwei weitere Elektroden 15, 16 auf. Zum einen dient eine optimalerweise am höchsten Punkt im Messrohr 8 angebrachte Füllstandsüberwachungselektrode 16 dazu, eine Teilbefüllung des Messrohres 1 zu detektieren, und ist dazu eingerichtet diese Information an den Nutzer weiterzuleiten und/oder den Füllstand bei der Ermittlung des Volumendurchflusses zu berücksichtigen. Des Weiteren dient eine Bezugselektrode 17, die üblicherweise diametral zur Füllstandsüberwachungselektrode 16 bzw. am untersten Punkt des Messrohrquerschnittes angebracht ist, dazu, eine ausreichende Erdung des Mediums zu gewährleisten.

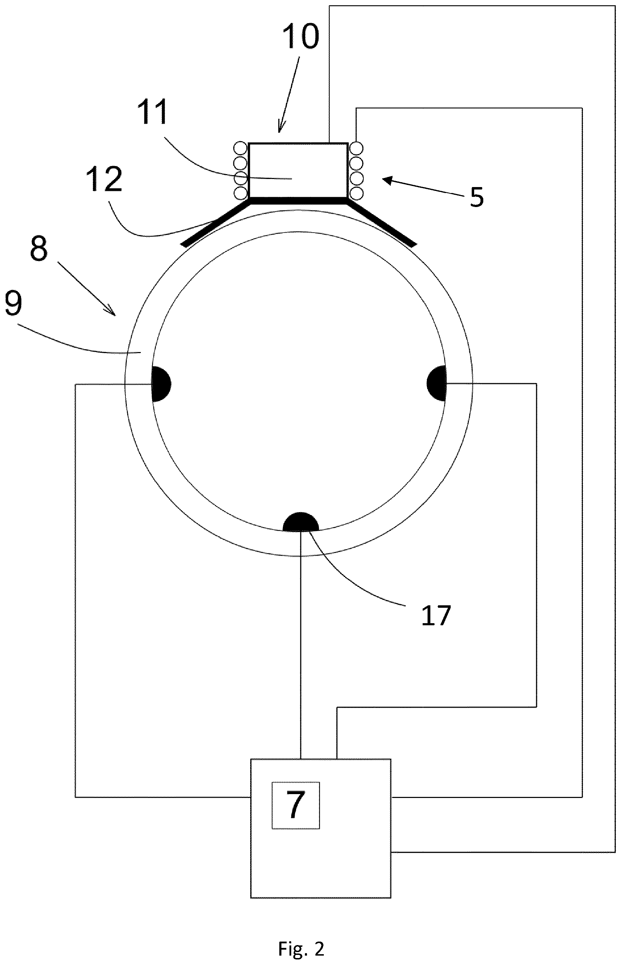

Die Fig. 2 zeigt eine erste Ausgestaltung der erfindungsgemäßen magnetisch-induktiven Durchflussmessvorrichtung. Die erste Ausgestaltung unterscheidet sich von dem oben dargelegten Stand der Technik im Wesentlichen darin, dass auf eine Füllstandsüberwachungselektrode verzichtet und stattdessen ein Feldführungskörper 10 als Sensorelektrode für eine kapazitive Bestimmung des Füllstandes eingesetzt wird. Auf eine Abbildung des Gehäuses wurde aus Übersichtsgründen verzichtet.

Zudem umfasst die Feldführungsanordnung 5 genau einen Feldführungskörper 10, bestehend aus einem Spulenkern 11 und einem Polschuh 12. Der Polschuh 12 und der Spulenkern 11 sind zweiteilig dargestellt. Die Verbindung des Feldführungskörpers 10 mit der Betriebsschaltung 7 erfolgt über den Spulenkern 11. Die Betriebsschaltung 7 ist dazu eingerichtet ein Erregersignal an den Feldführungskörper 10 aufzuprägen und ein Antwortsignal an den Feldführungskörper 10 zu ermitteln. Alternativ kann die Betriebsschaltung 7 dazu eingerichtet sein das Erregersignal an dem Polschuh aufzuprägen und das Antwortsignal an ebendiesem zu ermitteln. Beides erfolgt in Bezug auf eine im Messrohr 8 angeordnete Bezugselektrode 17. In der dargestellten Ausgestaltung ist die Bezugselektrode 17 eine pilzkopfförmige Elektrode, die entgegengesetzt zum Feldführungskörper 10 - im unteren Bereich des Messrohres - angeordnet ist. Es sind jedoch auch andere Formen von Bezugselektroden möglich.

Das Messrohr 8 umfasst einen Messrohrkörper 9, jedoch ist der - anders als im obigen Stand der Technik - aus einem elektrisch isolierenden Material gebildet. Somit kann auf einen elektrisch isolierenden Liner verzichtet werden. Weist das zu führende Medium eine ausreichend hohe Leitfähigkeit auf, so nimmt es im Blick auf die Sensorelektrode die Funktion der Gegenelektrode an. Das Dielektrikum des sich durch die beiden Elektroden ausbildenden Kondensators ist im Wesentlichen die elektrisch isolierende Wandung des Messrohrkörpers 9.

Alternativ kann ein weiterer Feldführungskörper vorgesehen werden, welcher jedoch nicht als Sensorelektrode eingerichtet und nicht mit der Betriebsschaltung elektrisch verbunden ist.

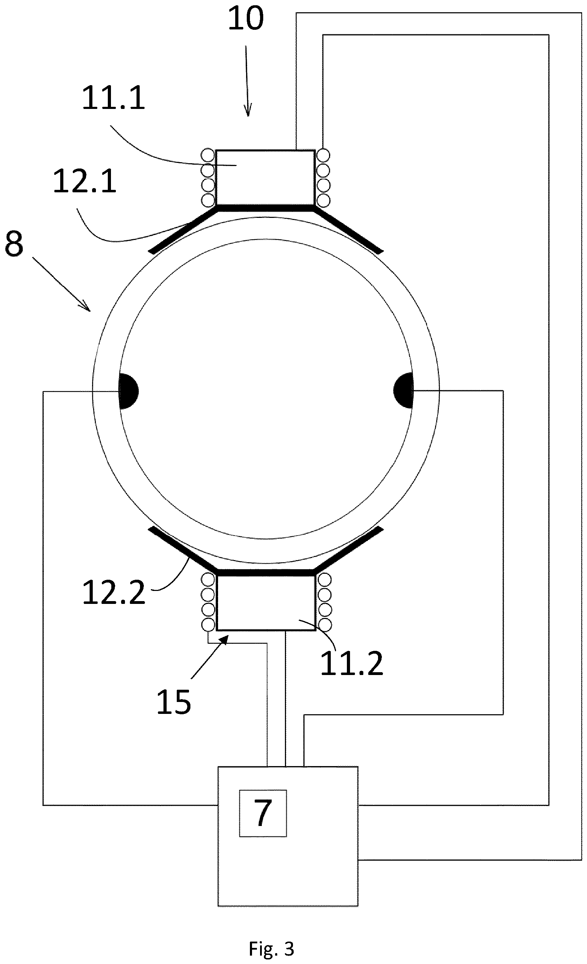

Die Fig. 3 zeigt eine zweite Ausgestaltung der erfindungsgemäßen magnetisch-induktiven Durchflussmessvorrichtung. Die zweite Ausgestaltung unterscheidet sich von der ersten Ausgestaltung im Wesentlichen darin, dass genau zwei Feldführungskörper 10, 15 diametral am Messrohr 8 angeordnet sind und beide jeweils mit der Betriebsschaltung 7 elektrisch verbunden sind. Die Feldführungskörper 10, 15 umfassen jeweils einen Spulenkern 11.1, 11.2 und einen Polschuh 12.1, 12.2. Auf die Darstellung der Bezugselektrode wurde verzichtet. Diese kann beispielsweise ähnlich wie die herkömmlichen Messelektroden - z.B. als Spitzelektrode - oder aber als Erdungsring ausgebildet sein.

Die Betriebsschaltung 7 ist mit den beiden Feldführungskörpern 10, 15 elektrisch verbunden und dazu eingerichtet, an beiden Feldführungskörpern 10, 15 jeweils ein Erregersignal einzuspeisen und jeweils ein Antwortsignal, welches üblicherweise die Form eines zeitlich alternierenden Stromes ausweist zu ermitteln. Aus den beiden Antwortsignalen lässt sich jeweils eine Messkapazität bestimmen, anhand der Aussagen über eine etwaige Teilfüllung, Ablagerung oder Sedimentation gemacht werden können. Alternativ kann die Betriebsschaltung 7 dazu eingerichtet sein ein Erregersignal an einem ersten Feldführungskörper 10 von den zwei Feldführungskörpern 10, 15 anzulegen und das Antwortsignal an einem zweiten Feldführungskörper 15 der zwei Feldführungskörper 10, 15 zu empfangen. Aus dem Antwortsignal lässt sich unter Berücksichtigung des Erregersignales eine Messkapazität bestimmen, die abhängig vom Füllstand des Mediums im Messrohr 8 ist.

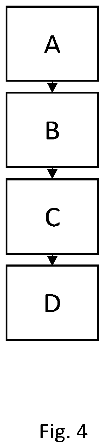

Die Fig. 4 zeigt einen erfindungsgemäßen Verfahrensablauf zum Ermitteln eines Füllstandes eines Mediums in einem Messrohr mit einem magnetisch-induktiven Durchflussmessgerät. In einem ersten Verfahrensschritt A wird an einer Feldführungsanordnung ein zeitlich alternierendes Erregersignal aufgebracht. Die Feldführungsanordnung umfasst mindestens einen Feldführungskörper, welcher durch mindestens einen Spulenkern und/oder mindestens einen Polschuh gebildet ist. Das Beaufschlagen mit dem Erregersignal erfolgt über eine Betriebsschaltung, die mit der Feldführungsanordnung bzw. mit mindestens einem der Feldführungskörpern elektrisch verbunden ist. In einem weiteren Verfahrensschritt B wird mittels der Betriebsschaltung ein elektrisches Antwortsignal von der Feldfühungsanordnung bzw. dem Feldführungskörper empfangen. Dabei erfolgt das Beaufschlagen und Empfangen an einem einzigen Feldführungskörper. Alternativ kann an einem ersten Feldführungskörper das Erregersignal aufgebracht und an einem zweiten Feldführungskörper das Antwortsignal empfangen werden. Anhand des Antwortsignales, unter Berücksichtigung des Erregersignals, wird in einem weiteren Verfahrensschritt C eine Messkapazität ermitteln, welche vom Füllstand des Mediums im Messrohr abhängt. In einem letzten Verfahrensschritt D wird dann ein Füllstand in Abhängigkeit der ermittelten Messkapazität bestimmt. Alternativ kann eine Abweichung der ermittelten Messkapazität von einem Referenzwert oder einem Referenzbereich ermittelt werden und gegebenenfalls ein Warnhinweis ausgegeben werden.

### Bezugszeichenliste

- 1: magnetisch-induktives Durchflussmessgerät
- 2: Gehäuse
- 3: Messelektrode
- 4: Messelektrode
- 5: Feldführungsanordnung
- 6: Spulenanordnung
- 7: Betriebsschaltung
- 8: Messrohr
- 9: Messrohrkörper
- 10: Feldführungskörper
- 11: Spulenkern
- 12: Polschuh
- 13: Spule
- 14: Spule
- 15: Feldführungskörper
- 16: Füllstandsüberwachungselektrode
- 17: Bezugselektrode
- 18: Liner

## Patentansprüche

1. Magnetisch-induktive Durchflussmessvorrichtung zum Ermitteln einer strömungsgeschwindigkeitsabhängigen Messgröße eines fließfähigen Mediums in einem Messrohr oder in einer Rohrleitung, umfassend:
- eine Vorrichtung zum Abgreifen einer im fließfähigen Medium induzierten Messspannung, insbesondere mindestens zwei Messelektroden (3, 4) zum Bilden eines galvanischen Kontaktes mit dem Medium; und
- eine Vorrichtung zum Erzeugen eines Magnetfeldes,
wobei die Vorrichtung zum Erzeugen des Magnetfeldes eine Feldführungsanordnung (5) und eine Spulenanordnung (6) umfasst,
**dadurch gekennzeichnet, dass** die Vorrichtung zum Erzeugen des Magnetfeldes in einem Gehäuse (2) angeordnet ist,
wobei die Feldführungsanordnung (5) als eine Sensorelektrode zur kapazitiven Bestimmung und/oder Überwachung zumindest einer Prozessgröße, insbesondere eines Füllstandes des Mediums in der Rohrleitung oder dem Messrohr dient.

2. Magnetisch-induktive Durchflussmessvorrichtung nach Anspruch 1, umfassend:
- eine insbesondere im Gehäuse (2) angeordnete Betriebsschaltung (7),
wobei die Betriebsschaltung (7) mit der Feldführungsanordnung (5) insbesondere elektrisch verbunden ist,
wobei die Betriebsschaltung (7) dazu eingerichtet ist, die Feldführungsanordnung (5) mit einem insbesondere zeitlich alternierenden Erregersignal zu beaufschlagen, von der Feldführungsanordnung ein Antwortsignal zu empfangen und zumindest aus dem Antwortsignal eine Aussage über den Füllstand des Mediums in der Rohrleitung oder dem Messrohr zu treffen.

3. Magnetisch-induktive Durchflussmessvorrichtung nach Anspruch 1 und/oder 2,
wobei die magnetisch-induktive Durchflussmessvorrichtung ein magnetisch-induktives Durchflussmessgerät (1) umfasst,
wobei das magnetisch-induktive Durchflussmessgerät (1) ein Messrohr (8) umfasst,
wobei das Messrohr (8) einen elektrisch isolierenden Messrohrkörper (9) umfasst,
wobei die mindestens zwei Messelektroden (3, 4) insbesondere diametral am Messrohrkörper (9) angeordnet sind,
wobei der Messrohrkörper (9) eine Außenfläche umfasst,
wobei die Feldführungsanordnung (5) auf der Außenfläche angeordnet ist.

4. Magnetisch-induktive Durchflussmessvorrichtung nach Anspruch 3,
wobei die Feldführungsanordnung (5) einen, insbesondere genau einen Feldführungskörper (10) umfasst,
wobei der Feldführungskörper (10) einen Spulenkern (11) und/oder einen Polschuh (12) umfasst.

5. Magnetisch-induktive Durchflussmessvorrichtung nach Anspruch 3 und/oder 4,
wobei die Feldführungsanordnung (5) zwei, insbesondere diametral an der Außenfläche angeordnete Feldführungskörper (10) umfasst,
wobei die Feldführungskörper (10) jeweils einen Spulenkern (11) und/oder einen Polschuh (12) umfassen,
wobei die Spulenanordnung (6) zwei Spulen (13, 14) umfasst,
wobei die zwei Feldführungskörper (10, 15) jeweils mit einer der zwei Spulen (12, 13) in Wirkung stehen.

6. Magnetisch-induktive Durchflussmessvorrichtung nach Anspruch 5,
wobei genau einer der zwei Feldführungskörper (10, 15) mit der Betriebsschaltung (7) verbunden ist.

7. Magnetisch-induktive Durchflussmessvorrichtung nach Anspruch 5,
wobei die zwei Feldführungskörper (10, 15) jeweils mit der Betriebsschaltung (7) verbunden sind,
wobei die Betriebsschaltung (7) dazu eingerichtet ist, einen ersten Feldführungskörper (10) der zwei Feldführungskörper (10, 15) mit einem insbesondere zeitlich alternierenden Erregersignal zu beaufschlagen, von einem zweiten Feldführungskörper (15) der zwei Feldführungskörper (10, 15) ein Antwortsignal zu empfangen und zumindest aus dem Antwortsignal eine Aussage über den Füllstand des Mediums in dem Messrohr, eine Ablagerung und/oder eine Sedimentation in dem Messrohr zu treffen.

8. Magnetisch-induktive Durchflussmessvorrichtung nach mindestens einem der Ansprüche 4 bis 7, umfassend:
- eine Bezugselektrode (17), welche mit einem Bezugspotential verbunden ist,
wobei die Bezugselektrode (17) derart am Messrohrkörper (9) angeordnet ist, um mit dem fließfähigen Medium einen galvanischen Kontakt zu bilden,
wobei die Betriebsschaltung (7) dazu eingerichtet ist, das Erregersignal in Bezug auf die Bezugselektrode (17) an dem einen und/oder dem zweiten Feldführungskörper (10, 15) aufzuprägen

9. Magnetisch-induktive Durchflussmessvorrichtung nach mindestens einem der Ansprüche 3 bis 8,
wobei die Betriebsschaltung (7) mit der Spulenanordnung (6) insbesondere elektrisch verbunden ist und dazu eingerichtet ist ein getaktetes Magnetfeld zu erzeugen bei dem sich zwischen zwei Anregungsphasen eine Ruhephase befindet, in der im Wesentlichen kein Spulenstrom fließt,
wobei in der Ruhephase das Erregersignal erzeugt und das Antwortsignal empfangen wird.

10. Magnetisch-induktive Durchflussmessvorrichtung nach mindestens einem der Ansprüche 3 bis 9,
wobei die Betriebsschaltung (7) dazu eingerichtet ist, einen Messwert einer elektrischen Kapazität der Feldführungsanordnung (5) zum Medium zumindest anhand des Antwortsignales zu bestimmen und anhand einer Abweichung der ermittelten Messwerte von einer Referenzkapazität eine Information bezüglich des Füllstandes zu ermitteln.

11. Verfahren zum Ermitteln eines Füllstandes eines Mediums in einem Messrohr oder in einer Rohrleitung mit der magnetisch-induktiven Durchflussmessvorrichtung nach einem der vorhergehenden Ansprüche, umfassend die Verfahrensschritte:
- Beaufschlagen einer Feldführungsanordnung (5) mit einem elektrischen, insbesondere zeitlich alternierenden Erregersignal;
- Empfangen eines elektrischen Antwortsignals von der Feldführungsanordnung (5);
- Ermitteln einer Messkapazität oder eine von der Messkapazität abhängigen Größe zumindest anhand des Antwortsignals; und
- Bestimmen eines Füllstandes des Mediums in einer Rohrleitung oder in einem Messrohr anhand der Messkapazität oder anhand der von der Messkapazität abhängigen Größe.

12. Verfahren nach Anspruch 11,
wobei die Feldführungsanordnung (5) insbesondere genau einen Feldführungskörper (10, 15) umfasst,
wobei das Beaufschlagen des Erregersignals insbesondere ausschließlich an dem Feldführungskörper (10, 15) erfolgt,
wobei das Empfangen des Antwortsignals insbesondere ausschließlich an dem Feldführungskörper (10, 15) erfolgt.

13. Verfahren nach Anspruch 11,
wobei die Feldführungsanordnung (5) zwei insbesondere genau zwei diametral angeordnete Feldführungskörper (10, 15) umfasst,
wobei das Beaufschlagen des Erregersignals insbesondere ausschließlich an einem ersten Feldführungskörper (10) der zwei Feldführungskörper (10, 15) erfolgt,
wobei das Empfangen des Antwortsignals insbesondere ausschließlich an einem zweiten Feldführungskörper (15) der zwei Feldführungskörper (10, 15) erfolgt.

14. Verfahren nach Anspruch 11, umfassend die Verfahrensschritte:
- Ermitteln einer ersten Messkapazität oder eine von der ersten Messkapazität abhängigen Größe zumindest anhand eines ersten Antwortsignals;
- Ermitteln einer zweiten Messkapazität oder eine von der zweiten Messkapazität abhängigen Größe zumindest anhand eines zweiten Antwortsignals; und
- Bestimmen eines Füllstandes des Mediums in einer Rohrleitung oder in einem Messrohr anhand der ersten Messkapazität und der zweiten Messkapazität oder anhand der von der ersten Messkapazität abhängigen Größe und der von der zweiten Messkapazität abhängigen Größe,
wobei die Feldführungsanordnung (5) zwei insbesondere diametral angeordnete Feldführungskörper (10, 15) umfasst,
wobei das Beaufschlagen eines ersten Erregersignals und das Empfangen des ersten Antwortsignales an einem ersten Feldführungskörper (10) der zwei Feldführungskörper (10, 15) erfolgt,
wobei das Beaufschlagen eines zweiten Erregersignals und das Empfangen des zweiten Antwortsignales an einem zweiten Feldführungskörper (15) der zwei Feldführungskörper (10, 15) erfolgt.

## Claims

1. Electromagnetic flow measuring device to determine a flow velocity-dependent measured variable of a flowable medium in a measuring tube or in piping, comprising:
- a device for tapping a measured voltage induced in a flowable medium, in particular at least two measuring electrodes (3, 4) to establish galvanic contact with the medium; and
- a device for generating a magnetic field,
wherein the device for generating the magnetic field comprises a field guide arrangement (5) and a coil arrangement (6),
**characterized in that** the device for generating the magnetic field is arranged in a housing (2),
wherein the field guide arrangement (5) serves as a sensor electrode for determining capacitance and/or monitoring at least one process variable, in particular the fill level of the medium in the piping or measuring tube.

2. Electromagnetic flow measuring device according to Claim 1, comprising:
- an operating circuit (7) arranged in particular in the housing (2),
wherein the operating circuit (7) is in particular electrically connected to the field guide arrangement (5),
wherein the operating circuit (7) is configured to supply the field guide arrangement (5) with an in particular temporally alternating excitation signal, to receive a response signal from the field guide arrangement and, at least based on the response signal, to provide details about the fill level of the medium in the piping or measuring tube.

3. Electromagnetic flow measuring device according to Claim 1 and/or 2,
wherein the electromagnetic flow measuring device comprises an electromagnetic flowmeter (1),
wherein the electromagnetic flowmeter (1) comprises a measuring tube (8),
wherein the measuring tube (8) comprises an electrically insulating measuring tube body (9), wherein the at least two measuring electrodes (3, 4) are in particular arranged diametrically on the measuring tube body (9),
wherein the measuring tube body (9) comprises an outer surface,
wherein the field guide arrangement (5) is arranged on the outer surface.

4. Electromagnetic flow measuring device according to Claim 3,
wherein the field guide arrangement (5) comprises one, in particular exactly one, field guide body (10),
wherein the field guide body (10) comprises a coil core (11) and/or a pole piece (12).

5. Electromagnetic flow measuring device according to Claim 3 and/or 4, wherein the field guide arrangement (5) comprises two field guide bodies (10), in particular diametrically arranged on the outer surface,
wherein the field guide bodies (10) each comprise a coil core (11) and/or a pole piece (12) wherein the coil arrangement (6) comprises two coils (13, 14),
wherein the two field guide bodies (10, 15) are each connected to one of the two coils (12, 13).

6. Electromagnetic flow measuring device according to Claim 5,
wherein exactly one of the two field guide bodies (10, 15) is connected to the operating circuit (7).

7. Electromagnetic flow measuring device according to Claim 5,
wherein the two field guide bodies (10, 15) are each connected to the operating circuit (7)
wherein the operating circuit (7) is configured to supply the first field guide body (10) of the two field guide bodies (10, 15) with an in particular temporally alternating excitation signal, to receive a
response signal from the second field guide body (15) of the two field guide bodies (10, 15) and, at least from the response signal, to provide details about the fill level of the medium in the measuring tube or about buildup and/or sedimentation in the measuring tube.

8. Electromagnetic flow measuring device according to at least one of the Claims 4 to 7, comprising:
- a reference electrode (17), which is connected to a reference potential,
wherein the reference electrode (17) is arranged on the measuring tube body (9) such that it establishes galvanic contact with the flowable medium,
wherein the operating circuit (7) is configured to supply the excitation signal in relation to the reference electrode (17) to the first and/or the second field guide body (10, 15).

9. Electromagnetic flow measuring device according to at least one of the Claims 3 to 8, wherein the operating circuit (7) is in particular electrically connected to the coil arrangement (6) and is configured to generate a cyclical magnetic field in which, between two excitation phases, there is a rest phase during which no coil current flows, wherein, in the rest phase, the excitation signal is generated and the response signal is received.

10. Electromagnetic flow measuring device according to at least one of the Claims 3 to 9, wherein the operating circuit (7) is configured to determine a measured value of an electrical capacitance of the field guide arrangement (5) to the medium at least based on the response signal and, based on a non-conformity in the determined measured values of a reference capacitance, to determine information regarding the fill level.

11. Method for determining the fill level of a medium in a measuring tube or in piping with the electromagnetic flow measuring device according to one of the above claims, comprising the process steps:
- Supply of a field guide arrangement (5) with an electrical, in particular temporally alternating, excitation signal;
- Receipt of an electrical response signal from the field guide arrangement (5);
- - Determination of a measuring capacitance or a variable dependent on the measuring capacitance, at least based on the response signal; and
- - Determination of the fill level of the medium in piping or in a measuring tube based on the measuring capacitance or based on the variable dependent on the measuring capacitance.

12. The method as claimed in claim 11,
wherein the field guide arrangement (5) comprises, in particular exactly one field guide body (10, 15),
wherein the excitation signal is in particular supplied exclusively at the field guide body (10, 15),
wherein the response signal is in particular received exclusively at the field guide body (10, 15),.

13. The method as claimed in claim 11,
wherein the field guide arrangement (5) comprises in particular exactly two diametrically arranged field guide bodies (10, 15),
wherein the excitation signal is in particular supplied exclusively at the first field guide body (10) of the two field guide bodies (10, 15),
wherein the response signal is in particular received exclusively at the second field guide body (15) of the two field guide bodies (10, 15).

14. Procedure as claimed in Claim 11, comprising the process steps:
- - Determination of a first measuring capacitance or a variable dependent on the measuring capacitance, at least based on a first response signal;
- - Determination of a second measuring capacitance or a variable dependent on the measuring capacitance, at least based on a second response signal; and
- - Determination of the fill level of the medium in piping or in a measuring tube based on the first measuring capacitance and the second measuring capacitance or based on the variable dependent on the first measuring capacitance and the variable dependent on the second measuring capacitance
wherein the field guide arrangement (5) comprises in particular two diametrically arranged field guide bodies (10, 15),
wherein a first excitation signal is supplied and the first response signal is received the first field guide body (10) of the two field guide bodies (10, 15),
wherein a second excitation signal is supplied and the second response signal is received at the second field guide body (15) of the two field guide bodies (10, 15).

## Revendications

1. Dispositif de mesure de débit électromagnétique destiné à la détermination d'une grandeur de mesure dépendant de la vitesse d'écoulement d'un produit fluide dans un tube de mesure ou dans une conduite, lequel dispositif comprend :
- un dispositif destiné à prélever une tension de mesure induite dans le produit fluide, notamment au moins deux électrodes de mesure (3, 4) pour former un contact galvanique avec le produit ; et
- un dispositif destiné à générer un champ magnétique,
le dispositif de génération du champ magnétique comprenant un dispositif de guidage de champ (5) et un arrangement de bobines (6),
**caractérisé en ce que** le dispositif de génération du champ magnétique est disposé dans un boîtier (2),
le dispositif de guidage de champ (5) servant d'électrode de capteur pour la détermination et/ou la surveillance capacitive d'au moins une grandeur de process, notamment d'un niveau du produit dans la conduite ou le tube de mesure.

2. Dispositif de mesure de débit électromagnétique selon la revendication 1, lequel dispositif comprend :
- un circuit de fonctionnement (7) disposé notamment dans le boîtier (2),
le circuit de fonctionnement (7) étant relié, notamment électriquement, au dispositif de guidage de champ (5),
le circuit de fonctionnement (7) étant conçu pour appliquer un signal d'excitation, notamment alternant dans le temps, au dispositif de guidage de champ (5), pour recevoir un signal de réponse du dispositif de guidage de champ et, au moins à partir du signal de réponse, pour fournir une information sur le niveau du produit dans la conduite ou le tube de mesure.

3. Dispositif de mesure de débit électromagnétique selon la revendication 1 et/ou 2,
pour lequel le dispositif de mesure de débit électromagnétique comprend un débitmètre électromagnétique (1),
le débitmètre électromagnétique (1) comprenant un tube de mesure (8),
le tube de mesure (8) comprenant un corps de tube de mesure électriquement isolant (9),
les au moins deux électrodes de mesure (3, 4) étant disposées notamment de manière diamétrale sur le corps du tube de mesure (9),
le corps de tube de mesure (9) comprenant une surface extérieure,
le dispositif de guidage de champ (5) étant disposé sur la surface extérieure.

4. Dispositif de mesure de débit électromagnétique selon la revendication 3,
pour lequel le dispositif de guidage de champ (5) comprend un, notamment exactement un corps de guidage de champ (10),
le corps de guidage de champ (10) comprenant un noyau de bobine (11) et/ou une pièce polaire (12).

5. Dispositif de mesure de débit électromagnétique selon la revendication 3 et/ou 4,
pour lequel le dispositif de guidage de champ (5) comprend deux corps de guidage de champ (10), notamment disposés de manière diamétrale sur la surface extérieure,
les corps de guidage de champ (10) comprenant chacun un noyau de bobine (11) et/ou une pièce polaire (12),
l'arrangement de bobines (6) comprenant deux bobines (13, 14),
les deux corps de guidage de champ (10, 15) étant chacun en action avec l'une des deux bobines (12, 13).

6. Dispositif de mesure de débit électromagnétique selon la revendication 5, pour lequel exactement un des deux corps de guidage de champ (10, 15) est relié au circuit de fonctionnement (7).

7. Dispositif de mesure de débit électromagnétique selon la revendication 5,
pour lequel les deux corps de guidage de champ (10, 15) sont respectivement reliés au circuit de fonctionnement (7),
le circuit de fonctionnement (7) étant conçu pour appliquer à un premier corps de guidage de champ (10) des deux corps de guidage de champ (10, 15) un signal d'excitation notamment alternant dans le temps, pour recevoir un signal de réponse d'un deuxième corps de guidage de champ (15) des deux corps de guidage de champ (10, 15) et pour obtenir, au moins à partir du signal de réponse, une information sur le niveau du produit dans le tube de mesure, un dépôt et/ou une sédimentation dans le tube de mesure.

8. Dispositif de mesure de débit électromagnétique selon au moins l'une des revendications 4 à 7, lequel dispositif comprend :
- une électrode de référence (17), laquelle est reliée à un potentiel de référence,
l'électrode de référence (17) étant disposée sur le corps de tube de mesure (9) de manière à former un contact galvanique avec le produit fluide,
le circuit de fonctionnement (7) étant conçu pour appliquer le signal d'excitation par rapport à l'électrode de référence (17) sur le premier et/ou le deuxième corps de guidage de champ (10, 15).

9. Dispositif de mesure de débit électromagnétique selon au moins l'une des revendications 3 à 8,
pour lequel le circuit de fonctionnement (7) est relié, notamment électriquement, à l'arrangement de bobines (6) et lequel circuit de fonctionnement est conçu pour générer un champ magnétique cadencé dans lequel, entre deux phases d'excitation, se trouve une phase de repos dans laquelle il ne circule pour l'essentiel aucun courant de bobine,
le signal d'excitation étant généré et le signal de réponse étant reçu pendant la phase de repos.

10. Dispositif de mesure de débit électromagnétique selon au moins l'une des revendications 3 à 9,
pour lequel le circuit de fonctionnement (7) est conçu pour déterminer une valeur mesurée d'une capacité électrique du dispositif de guidage de champ (5) par rapport au produit au moins à l'aide du signal de réponse et pour déterminer une information concernant le niveau à l'aide d'un écart des valeurs mesurées déterminées par rapport à une capacité de référence.

11. Procédé destiné à la détermination d'un niveau d'un produit dans un tube de mesure ou dans une conduite au moyen du dispositif de mesure de débit électromagnétique selon l'une des revendications précédentes, lequel procédé comprend les étapes suivantes :
- Application d'un signal d'excitation électrique, notamment alternant dans le temps, à un dispositif de guidage de champ (5) ;
- Réception d'un signal de réponse électrique du dispositif de guidage de champ (5) ;
- Détermination d'une capacité de mesure ou d'une grandeur dépendant de la capacité de mesure au moins à l'aide du signal de réponse ; et
- Détermination d'un niveau du produit dans une conduite ou dans un tube de mesure à l'aide de la capacité de mesure ou à l'aide de la grandeur dépendant de la capacité de mesure.

12. Procédé selon la revendication 11,
pour lequel le dispositif de guidage de champ (5) comprend notamment exactement un corps de guidage de champ (10, 15),
l'application du signal d'excitation s'effectuant notamment exclusivement sur le corps de guidage de champ (10, 15),
la réception du signal de réponse s'effectuant notamment exclusivement sur le corps de guidage de champ (10, 15).

13. Procédé selon la revendication 11,
pour lequel le dispositif de guidage de champ (5) comprend deux corps de guidage de champ (10, 15), notamment exactement deux corps de guidage de champ disposés de manière diamétrale,
l'application du signal d'excitation s'effectuant notamment exclusivement sur un premier corps de guidage de champ (10) des deux corps de guidage de champ (10, 15),
la réception du signal de réponse s'effectuant notamment exclusivement sur un deuxième corps de guidage de champ (15) des deux corps de guidage de champ (10, 15).

14. Procédé selon la revendication 11, lequel procédé comprend les étapes suivantes :
- Détermination d'une première capacité de mesure ou d'une grandeur dépendant de la première capacité de mesure au moins à l'aide d'un premier signal de réponse ;
- Détermination d'une deuxième capacité de mesure ou d'une grandeur dépendant de la deuxième capacité de mesure au moins à l'aide d'un deuxième signal de réponse ; et
- Détermination d'un niveau du produit dans une conduite ou un tube de mesure à l'aide de la première capacité de mesure et de la deuxième capacité de mesure ou à l'aide de la grandeur dépendant de la première capacité de mesure et de la grandeur dépendant de la deuxième capacité de mesure,
le dispositif de guidage de champ (5) comprenant deux corps de guidage de champ (10, 15) disposés notamment de manière diamétrale,
l'application d'un premier signal d'excitation et la réception du premier signal de réponse s'effectuant sur un premier corps de guidage de champ (10) des deux corps de guidage de champ (10, 15),
l'application d'un deuxième signal d'excitation et la réception du deuxième signal de réponse s'effectuant sur un deuxième corps de guidage de champ (15) des deux corps de guidage de champ (10, 15).
